# EUROPEAN PATENT APPLICATION

(11) **EP 2 237 139 A2**
(43) Date of publication of application: **06.10.2010**
(21) Application number: 09178818.2
(22) Date of filing: 11.12.2009
(51) Int. Cl.: G06F 3/048

(54) **Method for providing GUI and multimedia device using the same**

(30) Priority: 01.04.2009 KR 20090028068
(71) Applicant: Samsung Electronics Co., Ltd., Suwon-si, Gyeonggi-do 442-742 (KR)
(72) Inventor: Kang, Seung-soo, Gyeonggi-do (KR)
(74) Representative: Land, Addick Adrianus Gosling

(57) **Abstract**

A Graphical User Interface (GUI) providing method and a multimedia device using the same are provided. The GUI providing method extracts information of an external device and displays an item of the external device using the extracted information. Thus, data transfer with the external device can be accomplished more easily and simply.

## Description

This application claims priority from Korean Patent Application No. 2009-0028068, filed on April 1, 2009, in the Korean Intellectual Property Office, the disclosure of which is incorporated herein by reference in its entirety.

Apparatuses and methods consistent with exemplary embodiments of the present invention relate to a Graphical User Interface (GUI) providing method and a multimedia device using the same, and more particularly, to a GUI providing method of a multimedia device communicable with an external device, and a multimedia device using the same.

As functions of multimedia devices vary, most of the present-day multimedia devices receive and execute commands from a user through a Graphical User Interface (GUI). Recently, the outstanding multi-functionality of the multimedia device complicates the GUI and the manipulation of a device for handling the GUI.

That is, to use the multimedia device of the multiple functions, users need to search a menu in the complicated GUI displayed in a display and to manipulate the complicated multimedia device to control the GUI.

In addition, for the data transfer between two multimedia devices, the connection of the two multimedia devices requires a separate manipulation, which aggravates the inconvenience and the cumbersomeness of the user.

### SUMMARY

Exemplary embodiments of the present invention overcome the above disadvantages and other disadvantages not described above. Also, the present invention is not required to overcome the disadvantages described above, and an exemplary embodiment of the present invention may not overcome any of the problems described above.

Exemplary embodiments of the present invention provide a Graphical User Interface (GUI) providing method for allowing a user to manipulate a GUI more easily, simply, and intuitively, and a multimedia device using the same.

According to an aspect of the present invention, there is provided a method for providing a GUI of a multimedia device, which includes when determining that touch of an external device is input, extracting information of the external device by communicating with the external device; and displaying a first item, which relates to the external device, using the extracted information.

The displaying operation may display the first item with an image showing that the external device is absorbed into the multimedia device.

The method may further include displaying a second item which relates to contents stored to the multimedia device; and when the second item is dragged and dropped to the first item, displaying the first item and the second item with an image showing that the second item is absorbed into the first item.

The method may further include displaying a second item which relates to contents stored to the multimedia device; and when the second item is dragged and dropped to the first item, displaying to generate the second item in a display of the external device.

The method may further include detecting motion of a user around the multimedia device; receiving touch of the user in a touch screen; and when detecting motion of picking out the first item or touch of picking out the first item, displaying the first item with an image showing that the first item is picked out and removed from the multimedia device.

The method may further include when detecting the motion of picking out the first item, releasing the communication with the external device.

The first item may be an imitation item relating to a shape of the external device.

The method may further include displaying a second item which relates to contents stored to the multimedia device; and when the second item is dragged and dropped to the first item, transferring contents corresponding to the second item to the external device.

The method may further include displaying a third item which relates to contents stored to the external device, in the vicinity of the first item; and when the third item is dragged and dropped out of the vicinity, sending a transfer request of the contents corresponding to the third item to the external device.

The displaying operation may display the first item at a spot where the touch is input.

When the touch is input and a Radio Frequency (RF) tag of the external device is read by an RF tag reader of the multimedia device, the extracting operation may determine that the touch of the external device is input.

When the touch input is determined using a decompression scheme but the touch input is not determined using a static electricity scheme, the extracting operation may determine that the touch of the external device is input.

The displaying operation may include selecting the first item from an item list which matches a plurality of external devices with items relating to the external devices, using the extracted information; and displaying the selected first item.

The item list may be a list pre-stored to the multimedia device or a list received from an external server.

The extracting operation may communicate with the external device using Bluetooth communication or ZigBee communication.

The information relating to the external device may relate to a manufacturer or a model name of the external device.

The multimedia device may be a standing-type multimedia device.

According to another aspect of the present invention, a method for providing a GUI includes when touch is input, searching a device around a spot where the touch is input; extracting information of the device from the searched device; and displaying an item of the searched device using the extracted information.

According to yet another aspect of the present invention, a method for providing a GUI includes extracting information of an external device from the external device based on a first manipulation command and a second manipulation command input by the external device; and displaying an item of the searched device using the extracted information.

The first manipulation command may be a touch manipulation command directly touched and input by the external device, and the second manipulation command may be a tag manipulation command input by an RF tag of the external device.

According to still another aspect of the present invention, a method for providing a GUI includes sensing an external device within a preset range; when touch is input, extracting information of the external device from the external device; and displaying an item relating to the external device using the extracted information.

According to a further aspect of the present invention, a method for providing a GUI includes when a second device touches a first device, generating a first item relating to the second device, a second item relating to contents stored to the second device, or a third item relating to contents stored to the first device in a screen of the second device based on information relating to the second device touching the first device; and transferring, at the first device and the second device, the contents stored to the first device or the contents stored to the second device by manipulating the first item, the second item, or the third item.

According to a further aspect of the present invention, a multimedia device includes a touch screen; and a controller for, when determining that an external device touches the touch screen, extracting information of the external device by communicating with the external device and controlling to display a first item, which relates to the external device, in the touch screen using the extracted information.

The controller may control to display the first item with an image showing that the external device is absorbed into the multimedia device.

The controller may control to display the second item which relates to contents stored to the multimedia device, in the touch screen and control to display the first item and the second item with an image showing that the second item is absorbed into the first item when the second item is dragged and dropped to the first item

The controller may control to display the second item which relates to contents stored to the multimedia device, in the touch screen, and the external device may display and generate the second item in a display of the external device when the second item is dragged and dropped to the first item in the multimedia device.

The multimedia device may further include a motion detector for sensing motion of a user around the multimedia device. When motion of picking out the first item or touch of the user for picking out the first item is sensed, the controller may control to display the first item with an image showing that the first item is picked out and removed from the multimedia device

When the motion of picking out the first item is detected, the controller may release the communication with the external device.

The controller may control to display a second item which relates to contents stored to the multimedia device, in the touch screen. When the second item is dragged and dropped to the first item, the controller may control to transfer contents corresponding to the second item to the external device

The controller may control to display a third item which relates to contents stored to the external device, in the vicinity of the first item in the touch screen. When the third item is dragged and dropped out of the vicinity, the controller may control to send a transfer request of the contents corresponding to the third item to the external device

The multimedia device may further include an RF tag reader. When the touch is input to the touch screen and an RF tag of the external device is read by the RF tag reader, the controller may determine that the touch of the external device is input.

The touch screen may include a first detection module for sensing the touch of a decompression scheme; and a second detection module for sensing the touch of a static electricity scheme. When the touch is detected by the first detection module but the touch is not detected by the second detection module, the controller may determine that the touch of the external device is input.

According to a further aspect of the present invention, a multimedia system includes a mobile multimedia device; and a stationary multimedia device for extracting information of the mobile multimedia device by communicating with the mobile multimedia device when determining that touch of the mobile multimedia device is input, and displaying an item relating to the mobile multimedia device in a screen using the extracted information.

### BRIEF DESCRIPTION OF THE DRAWINGS

The above and/or other aspects of the present invention will become more apparent by describing certain exemplary embodiments of the present invention with reference to the accompanying drawings, in which:

FIG. 1 illustrates a multimedia system applicable to exemplary embodiments of the present invention;

FIG. 2 illustrates a TV according to an exemplary embodiment of the present invention;

FIG. 3 illustrates a method for recognizing touch of an external device based on tag information;

FIG. 4 illustrates a method for recognizing the touch of the external device based on a touching manner;

FIGS. 5A and 5B illustrate the item generation corresponding to the touch;

FIG. 6 illustrates a method for acquiring information of the external device after recognizing the touch of the external device based on the tag information;

FIG. 7 illustrates a method for acquiring information of the external device after recognizing the touch of the external device based on the touching manner;

FIGS. 8A and 8E illustrate GUI manipulation for transferring the stored item;

FIGS. 9A and 9B illustrate a user's manipulation for finishing content transmission and reception;

FIGS. 10A and 10B illustrate a GUI manipulation for transferring the item stored to a mobile phone to the TV; and

FIG. 11 illustrates a method for displaying status of the user's GUI manipulation and transmitting contents.

### DETAILED DESCRIPTION OF EXEMPLARY EMBODIMENTS

Exemplary embodiments of the present invention are described in greater detail below with reference to the accompanying drawings.

In the following description, like drawing reference numerals are used for the like elements, even in different drawings. The matters defined in the description, such as detailed construction and elements, are provided to assist in a comprehensive understanding of the invention. However, the present invention can be practiced without those specifically defined matters. Also, well-known functions or constructions are not described in detail since they would obscure the invention with unnecessary detail.

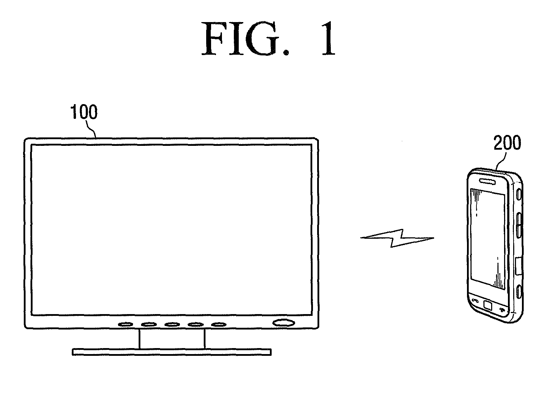

FIG. 1 depicts a multimedia system applicable to exemplary embodiments of the present invention. The multimedia system of FIG. 1 includes a TV 100 which is a stationary multimedia device, and a mobile phone 200 which is a mobile multimedia device used in association with the TV 100.

Herein, the stationary multimedia device represents a device used at the fixed location and the mobile multimedia device represents a device easily carried and used by a user.

The TV 100, which is the stationary multimedia device, not only receives and displays the broadcast from a broadcasting station to a user but also receives the touch of the user, detects a motion of the user, reads a Radio Frequency (RF) tag, generates a control command based on the read RF tag, and operates according to the generated control command.

Further, the TV 100 receives the touch of the mobile multimedia device such as mobile phone 200, generates a control command based on the touch, operates according to the generated control command, and sends the generated control command to the mobile multimedia device.

For example, when the mobile phone 200 touches the TV 100, the TV 100 displays an item relating to the mobile phone 200, i.e., an image of the mobile phone 200, in the touched section and additionally displays items corresponding to contents stored to the TV 100 or items corresponding to contents stored to the mobile phone 200.

As such, by means of the simple touch, various items are displayed in the screen of the TV 100. Hence, the user can easily and conveniently manipulate the GUI by handling the items displayed in the screen.

As stated above, since the item of the touched external device instead of the touched external device is represented in the screen, the stationary multimedia device of the present invention can be a device having difficulty in attaching to a touch screen after the external device is touched; that is, a standing-type multimedia device erected vertically from the ground or mounted to a wall.

The mobile phone 200, which is the mobile multimedia device, not only transceives voice data in connection with another mobile phone but also receives the control command generated at the stationary multimedia device in association with the stationary multimedia device such as TV 100 and functions according to the received control command.

In more detail, according to the GUI manipulation of the user in the screen of the TV 100, the mobile phone 200 transfers data such as contents to the TV 100 or receives data from the TV 100.

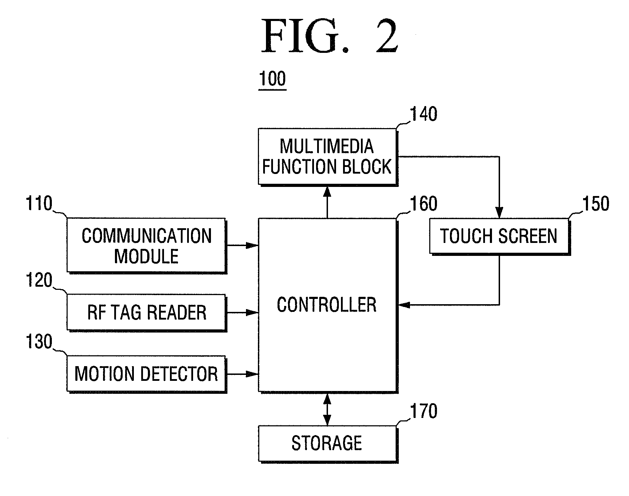

FIG. 2 is a block diagram of the TV 100 according to an exemplary embodiment of the present invention. The TV 100 of FIG. 2 includes a communication module 110, an RF tag reader 120, a motion detector 130, a multimedia function block 140, a touch screen 150, a controller 160, and a storage 170.

The communication module 110 is connected to the mobile multimedia device such as mobile phone 200 to mutually communicate using a proper communication scheme. Herein, the proper communication scheme can be a short-range communication scheme such as Bluetooth, ZigBee or Near Field Communication(NFC). The communication module 110 transfers the control command or data such as contents to the mobile phone 200 under the control of the controller 160, or receives data from the mobile phone 200.

The RF tag reader 120 recognizes an object or a person having the RF tag attached within a short range without physical contact. The RF tag reader 120 receives an RF tag signal from the RF tag, generates tag information based on the received RF tag signal, and transfers the generated tag information to the controller 160. Herein, the tag information includes information relating to the RF tag and information relating to the object or the person having the RF tag attached. The tag information may be pre-stored by the user.

The motion detector 130, which can be called a 3D camera sensor, detects a three-dimensional motion of the user and receives the manipulation input according to the motion. The motion detector 130 principally senses the motion of the movement of a user's finger by capturing an interface manipulation according to the user's finger movement and provides motion information of the sensed motion to the controller 160.

The multimedia function block 140 controls to display the screen according to the user's manipulation. For doing so, the multimedia function block 140 generates the GUI such as menu item or content item and executes a function corresponding to the interface manipulation, for example, reproduction or transfer of contents such as video, still image, music, and text.

The touch screen 150 receives the interface manipulation of the user such as touch or multi-touch, generates touch information based on the user's manipulation, and provides the generated touch information to the controller 160. For example, when the user's touch manipulation is input to reproduce video, the controller 160 generates a control command to replay the video, the control command generated at the controller 160 is applied to the multimedia function block 140, and the touch screen 150 displays contents reproduced by the multimedia function block 140.

The touch screen 150 receives the touch of the external device, generates touch information based on the touch of the external device, and provides the generated touch information to the controller 160. For example, when the touch of the mobile phone 200 is input, the touch screen 150 generates touch information based on the touch of the mobile phone 200 and provides the generated touch information to the controller 160.

The touch of the external device and the touch of the user with his/her finger can be identified as follows.

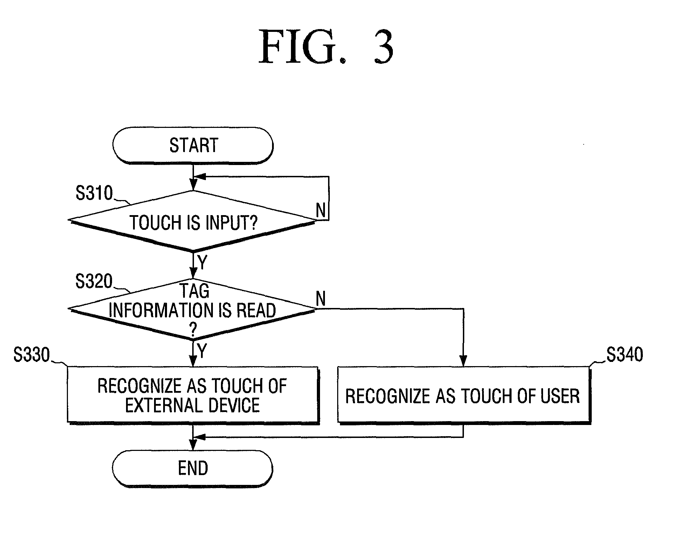

Firstly, when the touch of something is input and the RF tag signal is input to the RF tag reader 120 before or after the touch, the touch is recognized as the touch of the external device, which shall be described by referring to FIG. 3.

FIG. 3 illustrates a method for recognizing the touch of the external device based on the tag information.

When the touch is input (S310-Y), the controller 160 determines whether the RF tag is input through the RF tag reader 120 and the tag information is read (S320). Note that the determining of whether the touch is input (S310) and the determining of whether the tag information is read (S320) are not bound by the temporal order. Exemplary embodiments of the present invention are applicable to a case where the tag information is read ahead.

Upon determining the read of the tag information (S320-Y), the controller 160 recognizes as the touch of the external device (S330). Determining that the tag information is not read (S320-N), the controller 160 recognizes as the touch of the user, rather than the external device (S340).

In this exemplary embodiment, the RF tag reader 120 is able to read the RF tag in the short range. Unless the difference between the touch input time and the tag signal input time of the RF tag of the external device is large, the touch of the external device is confirmed.

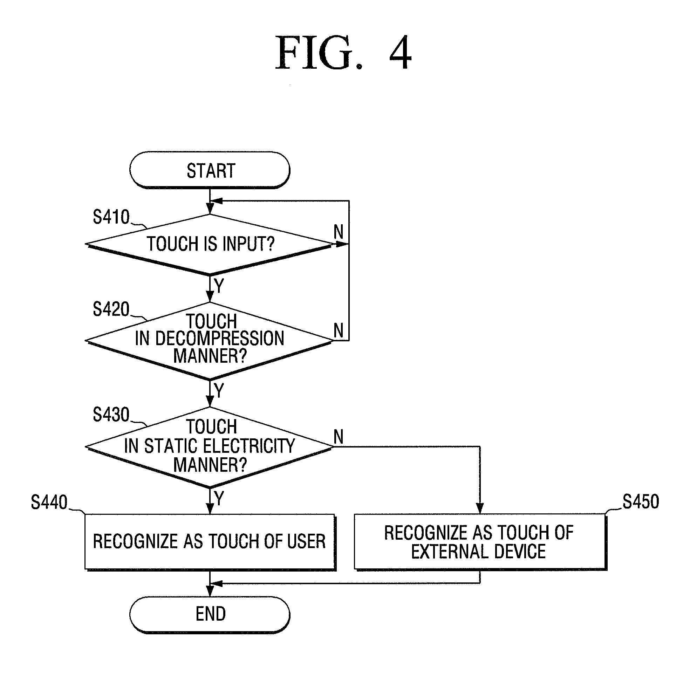

Secondly, a compression detection module for detecting the touch using decompression and a static electricity detection module for detecting the touch using static electricity are provided. When the touch is detected using the decompression but not using the static electricity, the touch of the external device is confirmed, which shall be described by referring to FIG. 4. In a exemplary embodiment, the decompression means depressing a portion of the touch screen.

FIG. 4 illustrates a method for recognizing the touch of the external device based on a touching manner.

When the touch is input (S410-Y), the controller 160 determines whether the input touch is the touch detected using the decompression (S420).

Upon determining the touch detected using the decompression (S420-Y), the controller 160 determines whether the input touch is the touch detected using the static electricity (S430).

When the input touch is the touch using the static electricity (S430-Y), the controller 160 recognizes as the touch of the user (S440). When the input touch is not the touch using the static electricity (S430-N), the controller 160 recognizes as the touch of the external device (S450).

In this exemplary embodiment, the user's touch using his/her finger can be sensed using both of the decompression and the static electricity, whereas the touch of the external device composed of a material not electrically conductive, such as plastic, is sensed using the decompression but not using the static electricity.

According to the first manner, which external device is touching can be determined by reading the RF tag and using the tag signal received from the RF tag reader 120. However, the second manner does not identify which external device is touching. Consequently, the touched external device may be identified by using the shape of the touched part or by searching a nearby device right after the touch.

This method for recognizing the touch of the external device is merely an example, and the exemplary embodiments of the present invention are applicable to other various methods for recognizing the touch of the external device.

Referring back to FIG. 2, the controller 160 controls the communication module 110 and the multimedia function block 140 using the tag information, the motion information, and the touch information fed from the RF tag reader 120, the motion detector 130, and the touch screen 150.

Using the tag information, the motion information, and the touch information, the controller 160 acquires information relating to the external device contacting the touch screen 150 of the TV 100 and generates the control command to control the external multimedia device contacting the touch screen 150.

The storage 170 is a storage medium containing contents reproducible at the TV 100 and programs for driving the TV 100. The storage 170 can be realized using a memory, a Hard Disk Drive (HDD), and so forth.

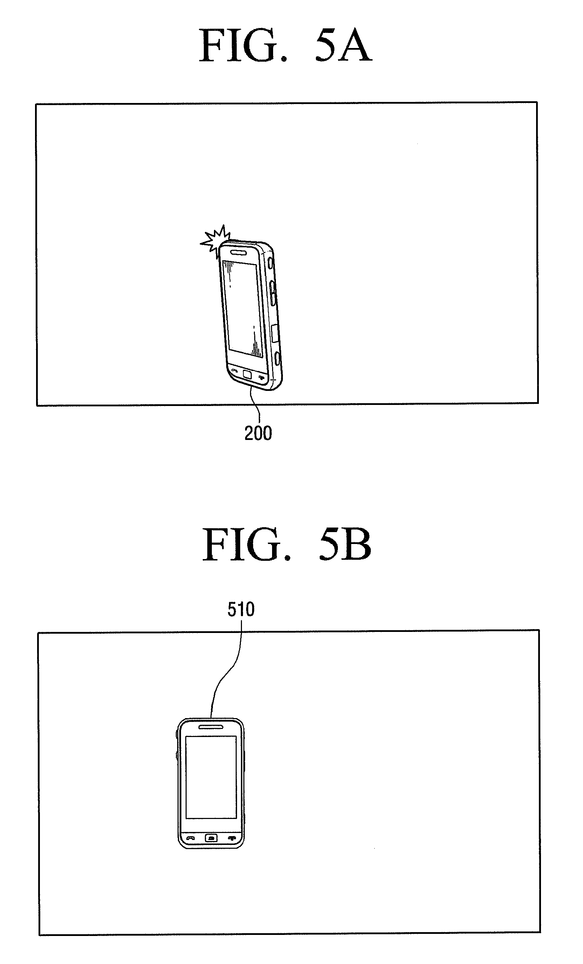

When the external device such as mobile phone 200 touches the TV 100, a method for generating the item for the touched external device is now described by referring to FIGS. 5A and 5B.

FIGS. 5A and 5B depict the item generation corresponding to the touch. When the mobile phone 200 of the user contacts the touch screen 150 as shown in FIG. 5A, the controller 160 recognizes the touch of the external device using the two above-mentioned methods or other methods and acquires the information of the touched external device; that is, the information of the mobile phone 200.

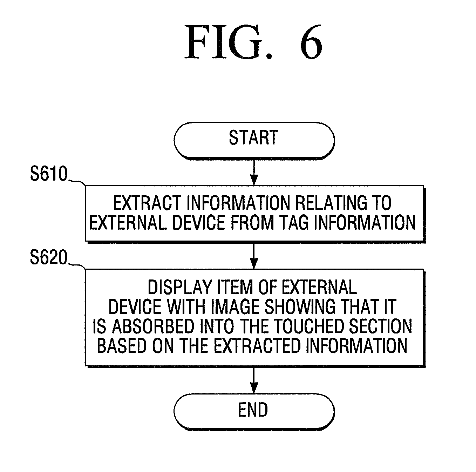

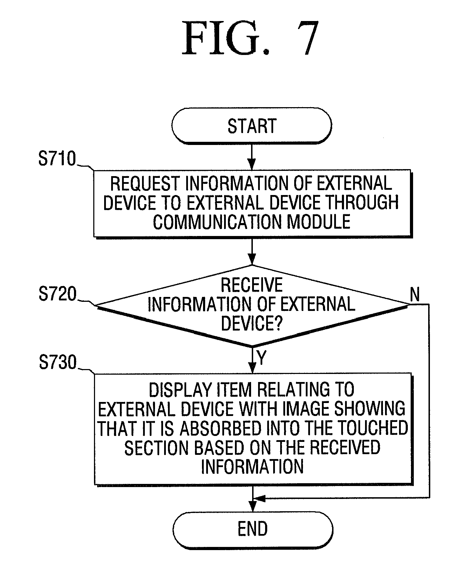

The method for acquiring the information of the touched external device after recognizing the touch of the external device shall be elucidated by referring to FIGS. 6 and 7.

Based on the information of the mobile phone 200, the controller 160 controls to display the item 510 of the same shape as the mobile phone 200 in the touched section of the touch screen 150 as shown in FIG. 5B.

More specifically, when the mobile phone 200 contacts the touch screen 150, the item 510 is generated with an image showing that the touched mobile phone 200 is absorbed into the touched section. That is, the item 510 is generated as if the touched mobile phone 200 is absorbed into the touched section. As such, when the mobile phone 200 touches the touch screen 150, the user can feel as if his/her mobile phone 200 is absorbed into the inside of the touch screen 150 and is displayed inside the touch screen 150.

Herein, the information relating to the mobile phone 200 can include information of a manufacturer or a model name of the mobile phone 200. The item 510 of the mobile phone 200 can be extracted from a list pre-stored to the storage 170. After the information of the mobile phone 200 is acquired, the item 510 can be extracted in the communication with an external server (not shown). The number, type, shape, colour, arrangement, and display position of the items 510 represented in the screen of the touch screen 150 can be fixed or altered by the setting of the user.

The acquisition of the information of the external device can be accomplished in two manners according to the recognition scheme of the external device touch.

FIG. 6 is a flowchart of a method for acquiring the information of the external device after recognizing the touch of the external device based on the tag information. Namely, FIG. 6 illustrates the method for acquiring the information of the external device recognized using the scheme of FIG. 3. The controller 160 recognizes the touch of the external device based on the tag information read by the RF tag reader 120.

Next, the controller 160 extracts the information of the touched external device from the read tag information (S610). As mentioned earlier, the tag information includes the information of the RF tag and the information relating to the object or the person to which the RF tag is attached. Hence, the tag information includes the information relating to the manufacturer or the model name of the external device with the RF tag attached.

The controller 160 controls to display the item of the external device as if the external device is absorbed into the touched section based on the extracted information (S620).

FIG. 7 is a flowchart of a method for acquiring information of the external device after recognizing the touch of the external device based on the touching manner. That is, FIG. 7 illustrates the method for acquiring the information of the external device recognized using the scheme of FIG. 4. Naturally, the controller 160 can recognize merely the touch of the external device and cannot recognize which external device is touching in the current state.

To identify which external device is touching, the controller 160 sends a message requesting the information of the external device to the touched external device through the communication module 110 (S710). Not knowing which external device is touching, the controller 160 can broadcast the message without specifying the external device, or detect the nearby external device and send the message by specifying the external device.

Upon receiving the information of the external device from the external device (S720-Y), the controller 160 controls to display the item of the external device based on the received information as if the external device is absorbed into the touched section (S730).

Thus, the user can manipulate the GUI more easily, simply, and intuitively.

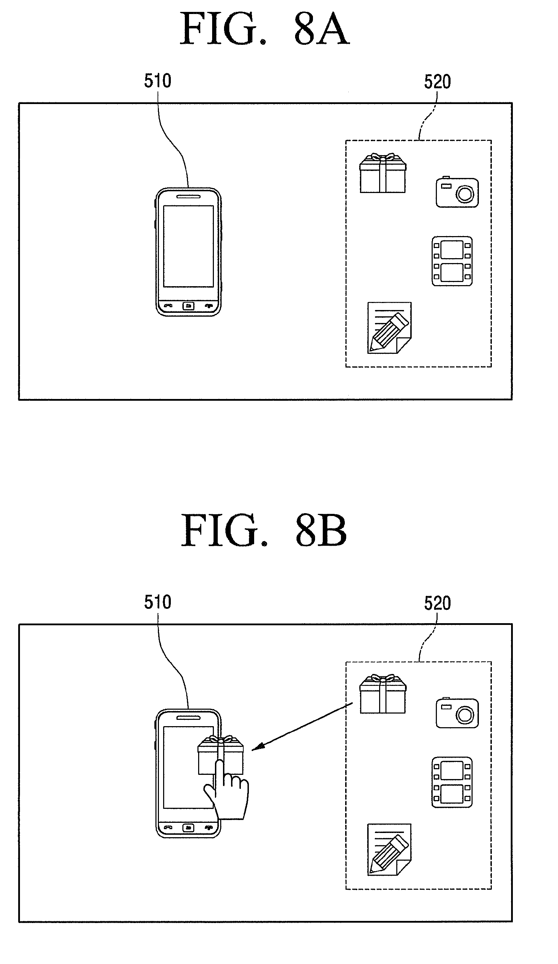

Meanwhile, when the mobile phone 200 touches, items corresponding to the contents stored to the TV 100 (hereafter, referred to as a TV item) can be displayed in addition to the item 510 of the mobile phone 200, and the content corresponding to the TV item can be transferred according to the user's GUI manipulation of the TV item, which shall be described in more detail by referring to FIGS. 8A through 8E.

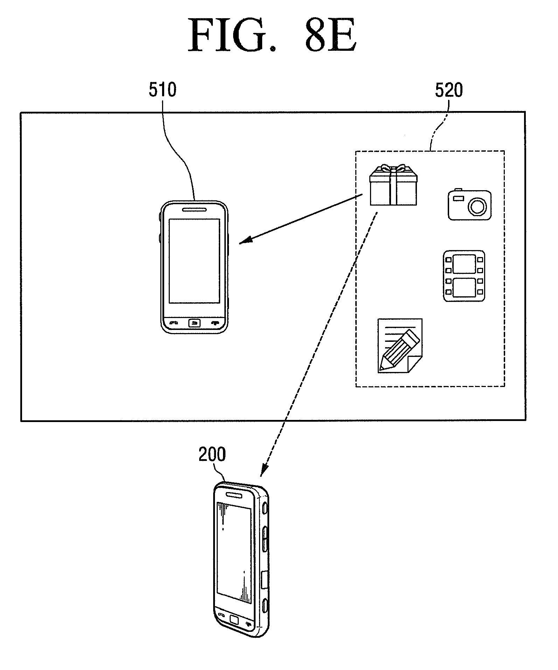

FIGS. 8A and 8E depict the GUI manipulation for transferring the stored item. When the item 510 is generated in one side of the touch screen 150, the TV item 520 can be generated in the other side of the touch screen 150 as shown in FIG. 8A.

The TV item 520 corresponds to the contents stored to the TV 100, and the user can set to fix or alter the number, type, shape, colour, arrangement, and display location of the TV item 520.

For instance, according to the setting of the user with respect to the type of the TV item 520, the touch screen 150 can display the items corresponding to all of contents stored to the TV 100, the items corresponding to the contents transmittable from the TV 100 to the mobile phone 200, and the items corresponding to the user's favorite contents of the contents stored to the TV 100.

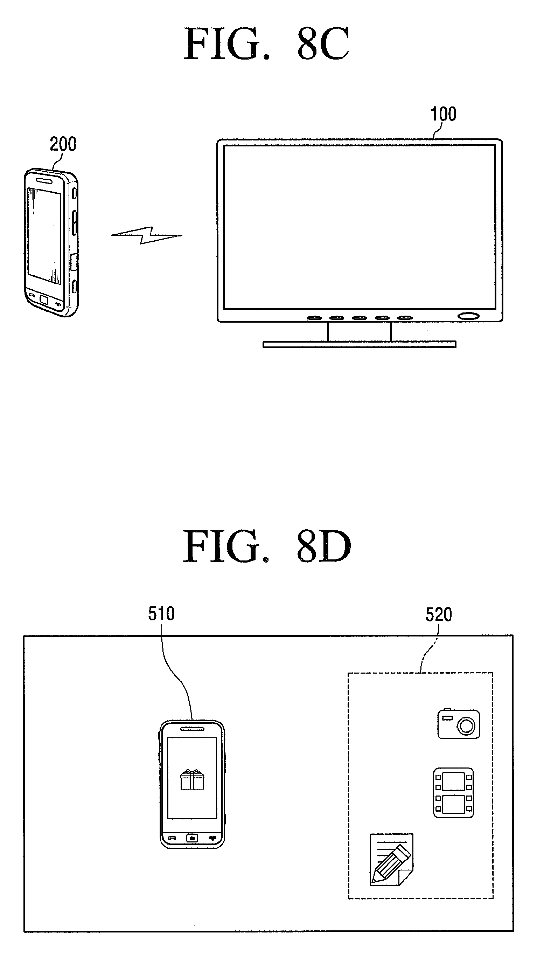

When some of the TV items 520 are dragged and dropped to the item 510 as shown in FIG. 5B, the controller 160 controls to attempt to communicate with the mobile phone 200 and to transfer the contents corresponding to the dragged and dropped items to the mobile phone 200 via the communication module 110 as shown in FIG. 8C.

The item corresponding to the transferred content can be represented in the display part of the mobile phone 200 and removed from the touch screen 150 as shown in FIG. 8D.

In FIG. 8E, the solid line indicates the drag according to the user's manipulation and the dotted line indicates the actual content transfer over the radio communication. That is, the solid line indicates the movement of the item of the content, i.e., an image of the content, and the dotted line indicates the movement of the actual content.

Through the drag and drop of the user, the item corresponding to the content transfers in the screen of the touch screen 150 and the actual content transfers via the communication module 110 as well. Thus, the user can more intuitively manipulate the GUI.

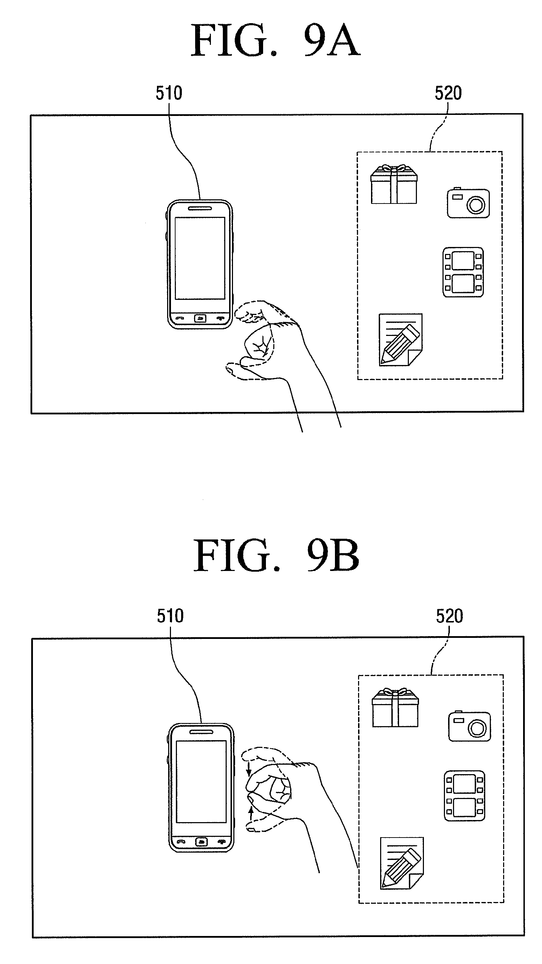

When the content transmission and reception is completed between the TV 100 and the mobile phone 200, the user can finish the content transmission and reception through the touch, the multi-touch, or the motion, which shall be described in further detail by referring to FIGS. 9A and 9B.

FIGS. 9A and 9B depict the user's manipulation for finishing the content transmission and reception. When the motion of grasping the item 510 is input around the touch screen 150 as shown in FIG. 9A, the motion detector 130 provides the motion information of the detected motion to the controller 160.

When the multi-touch for picking out the item 510 displayed in the touch screen 150 with two fingers is input as shown in FIG. 9B, the touch screen 150 provides the touch information of the input multi-touch to the controller 160.

When the motion information or the touch information is input as above, the controller 160 determines the termination of the content transfer and controls to remove the item 510 from the touch screen 150.

In more specifically, the controller 160 controls the touch screen 150 to remove the item 510 from the touch screen 150 as if the item 510 is pulled out from the touch screen 150. By means of the motion or the touch similar to the removal of the mobile phone 200, the item 510 corresponding to the mobile phone 200 is removed from the touch screen 150. Thus, the user can feel as if the mobile phone 200 is actually removed.

So far, the item 510 corresponding to the mobile phone 200 is removed from the touch screen 150 through the motion or the touch similar to the removal of the mobile phone 200. It should be understood that the controlling based on the motion and the controlling based on the touch are not limited to those cases.

For example, the item can be removed through the touch or the motion similar to the action flipping with the fingers or fanning with the palm of the hand, and the backside of the item can be displayed through the touch or the motion similar to the action turning over the item.

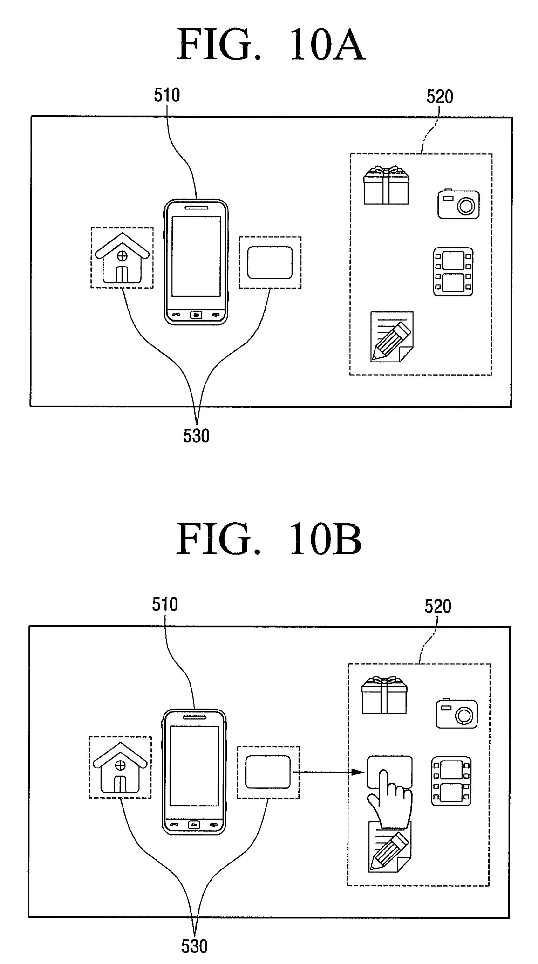

When the mobile phone 200 touches, items corresponding to the contents stored to the mobile phone 200 (hereafter, referred to as a mobile phone item) can be displayed in addition to the item 510 of the mobile phone 200 and the TV item 520. Through the user's GUI manipulation of the mobile phone item, the content corresponding to the mobile phone item can be transferred, which shall be explained in detail by referring to FIGS. 10A and 10B.

FIGS. 10A and 10B depict the GUI manipulation for transferring the item stored to the mobile phone 200 to the TV 100. When the item 510 touching one side of the touch screen 150 is generated in the touched section and the TV item 520 is generated in the other side of the touch screen 150 as shown in FIG. 10A, the mobile phone items 530 can be additionally generated around the item 510.

The mobile phone items 530 correspond to the contents stored to the mobile phone 200, and the user can set to fix or alter the number, type, shape, colour, arrangement, and display location of the mobile phone items 530.

For instance, according to the setting of the user with respect to the type of the mobile phone item 530, the touch screen 150 can display the items corresponding to all of contents stored to the mobile phone 200, the items corresponding to the contents transferrable from the mobile phone 200 to the TV 100, and the items corresponding to the user's favorite contents of the contents stored to the mobile phone 200.

When some of the mobile phone items 530 are dragged and dropped to the vicinity of the TV item 520 as shown in FIG. 10B, the controller 160 controls to attempt to communicate with the mobile phone 200 and to receive the contents corresponding to the dragged and dropped items from the mobile phone 200 via the communication module 110.

The item corresponding to the received content can be represented to be removed from the display part of the mobile phone 200.

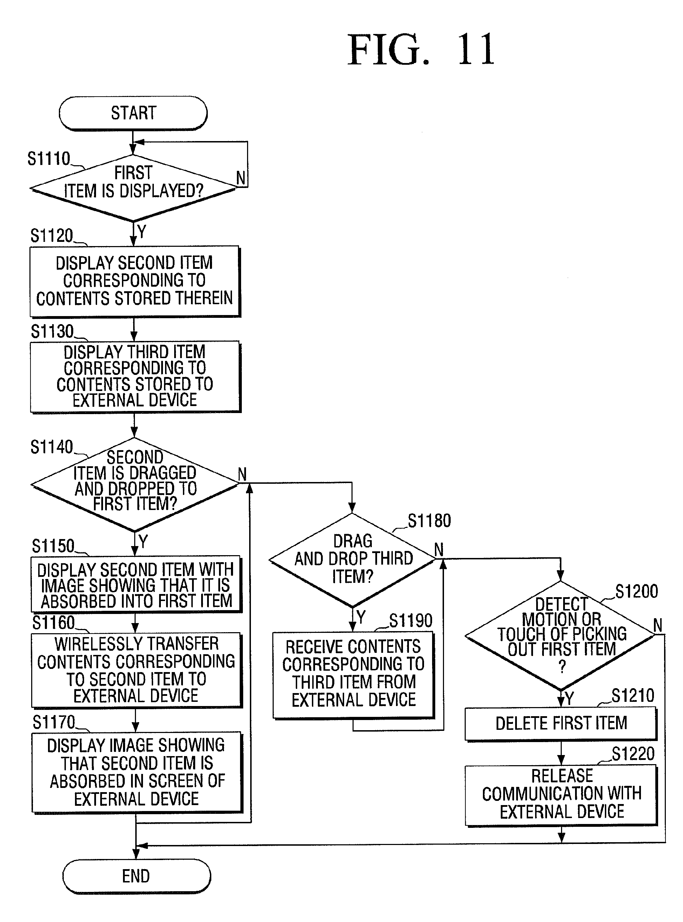

FIG. 11 illustrates a method for displaying status and transmitting contents according to the user's GUI manipulation. When the first item, which is the item of the touching external device, is displayed (S1110-Y), the controller 160 displays second items corresponding to the contents stored therein in the touch screen 150 (S1120).

The controller 160 displays third items corresponding to the contents stored to the external device, around the first item (S1130).

When determining that the user's GUI manipulation on the first item, the second item, and the third item drags and drops the second item to the first item (S1140-Y), the controller 160 controls to display as if the second item is absorbed to the first item (S1150).

The controller 160 controls the communication module 110 to wirelessly transfer the content corresponding to the second item to the external device (S1160). The external device displays as if the second item is absorbed into its screen (S1170).

When determining that the third item is dragged and dropped to the vicinity of the second item (S1180-Y), the controller 160 controls to receive the content corresponding to the third item from the external device (S1190).

Meanwhile, upon detecting the motion or the touch of picking out the first item (S1200-Y), the controller 160 controls to delete the first item from the touch screen 150 (S1210) and releases the communication with the external device (S1220).

As such, by providing the GUI to facilitate the data transfer between the two multimedia devices, the user can manipulate the GUI more easily, simply, and intuitively.

So far, the TV has been illustrated as the example of the stationary multimedia device and the mobile phone has been illustrated as the example of the mobile multimedia device, which are not limited to those examples. The present invention is applicable to other devices than the TV, such as Large Format Display (LFD) and Digital Information Display (DID), and to other devices than the mobile phone, such as MP3 player and Personal Digital Assistants (PDA).

The strict distinction between the stationary multimedia device and the mobile multimedia device is not always necessary, and the present invention does not necessarily distinguish or limit the stationary multimedia device and the mobile multimedia device.

While it has been described that the single mobile phone, which is the mobile multimedia device, operates in association with the single TV, which is the stationary multimedia device, this is a mere example. Note that one-to-one, one-to-many, and many-to-many interworking is applicable between a plurality of the mobile multimedia devices and a plurality of the stationary multimedia devices. For example, when the multiple mobile phones touch the TV, the stored contents can be transferred between the multiple mobile phones.

As set forth above, the GUI is provided to facilitate the data transfer between the two multimedia devices. Therefore, the user can manipulate the GUI more easily, simply, and intuitively.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A method for providing a Graphical User Interface (GUI) of a multimedia device, comprising:
if a touch of an external device is determined to be input, extracting information of the external device by communicating with the external device; and
displaying a first item, which relates to the external device, using the extracted information.

2. The method of claim 1, wherein the displaying operation displays the first item with an image showing that the external device is absorbed into the multimedia device.

3. The method of claim 1 or 2, further comprising:
displaying a second item which relates to a content stored in the multimedia device; and
if the second item is dragged and dropped to the first item, displaying the first item and the second item with an image showing that the second item is absorbed into the first item.

4. The method of any one of claims 1 to 3, further comprising:
displaying a second item which relates to a content stored in the multimedia device; and
if the second item is dragged and dropped to the first item, displaying the second item in a display of the external device.

5. The method of any one of claims 1 to 4, further comprising:
detecting a motion of a user around the multimedia device;
receiving a touch of the user in a touch screen; and
if the detecting the motion detects a motion of picking out the first item or touch of picking out the first item, displaying the first item with an image showing that the first item is picked out and removed from the multimedia device.

6. The method of claim 5, further comprising:
if the motion of picking out the first item is detected, ending the communication with the external device.

7. The method of any one of claims 1 to 6, wherein the first item is an iamge relating to a shape of the external device.

8. The method of any one of claims 1 to 7, further comprising:
displaying a second item which relates to a content stored in the multimedia device; and
if the second item is dragged and dropped to the first item, transferring the content corresponding to the second item into the external device.

9. The method of any one of claims 1 to 8, further comprising:
displaying a third item which relates to a content stored in the external device, in a vicinity of the first item; and
if the third item is dragged and dropped out of the vicinity, sending a transfer request of the contents corresponding to the third item to the external device.

10. The method of any one of claims 1 to 9, wherein the displaying operation displays the first item at a spot where the touch is input.

11. The method of any one of claims 1 to 10, wherein the displaying operation comprises:
selecting the first item from an item list which matches a plurality of external devices with items relating to the external devices, using the extracted information; and
displaying the selected first item.

12. The method of any one of claims 1 to 11, wherein the extracting operation communicates with the external device using Bluetooth communication or ZigBee communication.

13. The method of any one of claims 1 to 12, wherein the multimedia device is a standing-type multimedia device.

14. A multimedia device comprising:
a touch screen; and
a controller for, if an external device touching the touch screen is determined, extracting information of the external device by communicating with the external device and controlling to display a first item, which relates to the external device, in the touch screen using the extracted information.

15. A multimedia system comprising:
a mobile multimedia device; and
a stationary multimedia device for extracting information of the mobile multimedia device by communicating with the mobile multimedia device if a touch of the mobile multimedia device is determined to be input, and displaying an item relating to the mobile multimedia device in a screen using the extracted information.
